# EUROPEAN PATENT APPLICATION

(11) **EP 1 608 180 A1**
(43) Date of publication of application: **21.12.2005**
(21) Application number: 05253572.1
(22) Date of filing: 10.06.2005
(51) Int. Cl.: H04N 7/26

(54) **Method and apparatus for sub-pixel motion estimation which reduces bit precision**

(30) Priority: 11.06.2004 KR 2004042916
(71) Applicant: SAMSUNG ELECTRONICS CO., LTD., Suwon-si, Gyeonggi-do 442-742 (KR)
(72) Inventor: Park, Chan-sik, c/o 104-1001 Hyundai 1-cha I'Park, Suwon-si, Gyeonggi-do (KR); Lee, Jae-hun, c/o102-505 Doojin Apt., Yongin-si, Gyeonggi-do (KR); Lee, Nam-suk, c/o 104-702 Hwanggol Maeul, Yeongtong-gu, Suwon-si, Gyeonggi-do (KR)
(74) Representative: Robinson, Ian Michael

(57) **Abstract**

A method and apparatus are provided for sub-pixel motion estimation which performs sub-pixel motion estimation in which the precision of a difference between a pixel value of a block to be searched and a pixel value of a block of a search area, i.e., the number of bits of the difference, is reduced. The method for sub-pixel motion estimation in inter-prediction includes (a) determining one integer pixel corresponding to an estimated block by performing integer-pixel motion estimation, (b) receiving a value of a sub-pixel that is adjacent to the determined integer pixel and a value of an integer pixel of a block to be searched, (c) reducing a difference between the value of the sub-pixel and the value of the integer pixel and reducing a bit precision of the difference, and (d) calculating a similarity using the difference whose bit precision is reduced.

## Description

Apparatuses and methods consistent with the present invention relate to motion estimation in inter-prediction, and more particularly, to sub-pixel motion estimation in the precision of a difference between pixel values of a block to be searched and a block of a search area, i.e., the number of bits, is reduced in sub-pixel motion estimation.

Videos encoded according to video encoding standards H.264 are compressed at higher rates and have superior quality when compared to videos encoded according to conventional encoding methods. This is because motion estimation in H.264 is performed by sequentially performing integer-pixel motion estimation, half-pixel motion estimation, and then quarter-pixel motion estimation, resulting in more accurate motion estimation. However, since hardware of a motion estimation unit occupies 70% of the entire hardware of an encoder, it imposes a heavy load on the encoder. Also, since motion estimation is performed with respect to half pixels and quarter pixels, i.e., sub-pixels, more time is required for motion estimation in comparison to conventional motion estimation.

According to the present invention there is provided an apparatus and method as set forth in the appended claims. Preferred features of the invention will be apparent from the dependent claims, and the description which follows.

The present invention provides a method and apparatus for sub-pixel motion estimation, in which the precision of a difference between a pixel value of a block to be searched and a pixel value of a block of a search area, i.e., the number of bits, is reduced in sub-pixel motion estimation in inter-prediction.

According to an aspect of the present invention, there is provided a method for sub-pixel motion estimation in inter-prediction, the method including: (a) determining one integer pixel corresponding to an estimated block by performing integer-pixel motion estimation; (b) receiving a value of a sub-pixel that is adjacent to the determined integer pixel and a value of an integer pixel of a block to be searched; (c) reducing a difference between the value of the sub-pixel and the value of the integer pixel and reducing the precision of the difference; and (d) calculating a similarity using the difference whose precision is reduced.

The sub-pixel may be a half pixel or a quarter pixel, the half pixel is obtained by interpolating integer pixels that are adjacent to the determined integer pixel, and the quarter pixel may be obtained by interpolating half pixels that are adjacent to the obtained half pixel.

In (c), when the difference between the value of the sub-pixel and the value of the integer pixel is calculated, the number of bits of the difference may be reduced by discarding a predetermined number of upper bits of the difference to reduce the precision of the difference.

According to another aspect of the present invention, there is provided a method for sub-pixel motion estimation in inter-prediction, the method including: (a) receiving a value of a sub-pixel that is adjacent to an integer pixel determined through integer-pixel motion estimation and a value of an integer pixel of a block to be searched; (b) calculating the degree of degradation of video quality by performing sub-pixel motion estimation using the value of the sub-pixel and the value of the integer pixel; (c) calculating a difference between the value of the sub-pixel and the value of the integer pixel to reduce the precision of the difference, performing sub-pixel motion estimation, and calculating the degree of degradation of video quality; and (d) searching for a bit precision when a difference between the degree of degradation in (b) and the degree of degradation in (c) is less than a predetermined reference value, transforming the difference between the value of the sub-pixel and the value of the integer pixel according to the bit precision, and performing sub-pixel motion estimation on a following video.

The degree of degradation of video quality may be calculated using a peak signal-to-noise ratio (PSNR).

The predetermined reference value in (d) may be expressed by decibel units and is determined at a hundredth's place.

According to yet another aspect of the present invention, there is provided an apparatus for sub-pixel motion estimation in inter-prediction, the apparatus including: a difference calculating unit receiving a value of a sub-pixel that is adjacent to the determined integer pixel and a value of an integer pixel of a block to be searched and calculating a difference between the value of the sub-pixel and the value of the integer pixel; a precision reducing unit reducing the precision of the calculated difference; and a similarity calculating unit calculating a similarity between a search block and the block to be searched using the difference whose precision is reduced.

The apparatus may further include a transform unit that transforms the difference whose precision is reduced to a frequency domain.

The similarity calculating unit may calculate a sum of absolute differences (SAD) with respect to the difference whose bit precision is reduced or a sum of absolute Hadamard transformed differences (SATD) with respect to a result of transform to the frequency domain.

The above and other aspects of the present invention will become more apparent by describing in detail exemplary embodiments thereof with reference to the attached drawings in which:
Figure 1 is a view for explaining integer-pixel motion estimation;
Figure 2 is a view for explaining half-pixel motion estimation and quarter-pixel motion estimation;
Figure 3 is a block diagram of a motion estimation unit;
Figure 4 shows an exemplary structure of a PE array;
Figure 5 shows a detailed structure of a PE;
Figure 6 is a flowchart illustrating a method for sub-pixel motion estimation according to an exemplary embodiment of the present invention;
Figure 7 is a flowchart illustrating a method for sub-pixel motion estimation according to another exemplary embodiment of the present invention; and
Figure 8 is a block diagram of an apparatus for sub-pixel motion estimation according to an exemplary embodiment to the present invention.

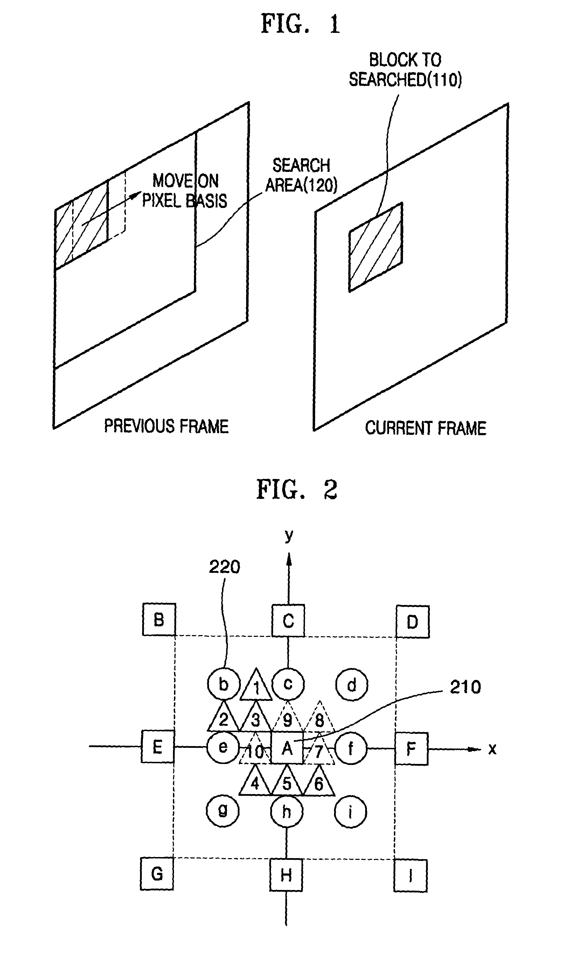

Figure 1 is a view for explaining integer-pixel motion estimation.

To estimate the degree of motion of a block 110 of a predetermined size to be searched in a current frame, e.g., the degree of motion of a macroblock, with reference to a previous frame, a search area 120 is selected from the previous frame, a block of the size that is the same as that of the block 110 is moved on a pixel basis within the search area 120, and a pixel value of the block 110 and a pixel value of the block in the search area 120 are compared, thereby searching for a block that is most similar to the block 110 in the previous frame. To search for the block that is most similar to the block 110, for example, a block having a minimum SAD from the block 110 is determined to be the most similar block and a pixel corresponding to the determined block is determined to be an integer pixel obtained by integer-pixel motion estimation.

Thereafter, motion estimation is further performed for half pixels that are adjacent to the integer pixel determined through integer-pixel motion estimation and then for quarter pixels that are adjacent to a half pixel determined through half-pixel motion estimation for more precise motion estimation.

Figure 2 is a view for explaining half-pixel motion estimation and quarter-pixel motion estimation.

In Figure 2, square pixels indicated by upper-case letters represent integer pixels, circle pixels indicated by lower-case letters represent half pixels, and triangle pixels indicated by numbers represent quarter pixels.

As described with reference to Figure 1, if motion estimation is performed for integer pixels and an integer pixel of the most similar block is determined, motion estimation is further performed for sub-pixels that are adjacent to the integer pixel. For example, if the integer pixel determined through integer-pixel motion estimation is a pixel A 210, motion estimation is performed for eight half pixels that are adjacent to the pixel A 210, i.e., pixels b, c, d, e, f, g, h, and i, and a half pixel of a block having a minimum SAD is determined. The SAD is calculated by summing absolute values of differences between pixel values of a block to be searched in a current frame and pixel values of a block in a previous frame. Thereafter, motion estimation is performed for quarter pixels that are adjacent to a half pixel 220 determined above.

As such, since half-pixel motion estimation and quarter-pixel motion estimation are performed using a result of integer-pixel motion estimation, a value of an integer pixel of a block to be searched in half-pixel motion estimation and quarter-pixel motion estimation and a value of a sub-pixel of a block in a search area are similar to each other. As a result, a difference between the value of the integer pixel of the block to be searched and the value of the sub-pixel of the block in the search area is not large. Thus, it is not necessary to use the difference in half-pixel motion estimation or quarter-pixel motion estimation, but the difference may be used for calculation of the SAD to lower bit precision, which affects video quality little.

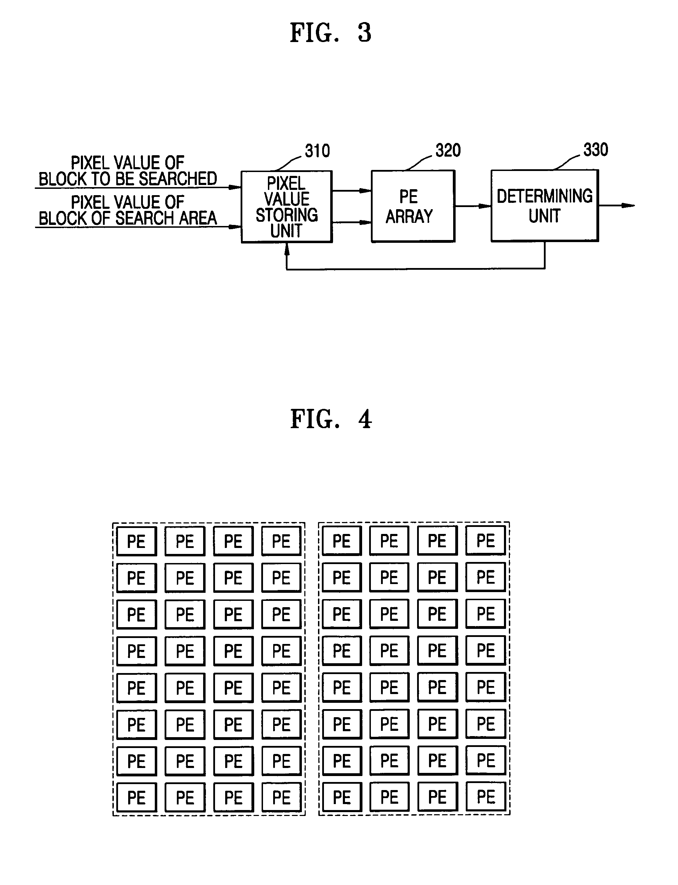

Figure 3 shows the structure of a motion estimation unit.

The motion estimation unit includes a pixel value storing unit 310, a processing element (PE) array 320, and a determining unit 330. The pixel value storing unit 310 stores a pixel value of a block to be searched and a pixel value of a block of a search area. The PE array 320 receives pixel values from the pixel value storing unit 310 and calculates a similarity. The similarity is obtained by calculating an SAD or a sum of absolute Hadamard transformed differences (SATD). The determining unit 330 determines a pixel corresponding to a motion vector according to the similarity calculated in the PE array 320 and increases an address of the pixel value storing unit 310 to cause the pixel value storing unit 310 to transmit the next pixel to the PE array 320.

Figure 4 shows an exemplary structure of the PE array 320.

The PE array 320 has two dimensions and, for example, in Figure 4, has 8x8 processing units PE. Each PE is the smallest processing unit that receives a pixel value of a block to be searched and a pixel value of a block of a search area and calculates an SAD or an SATD.

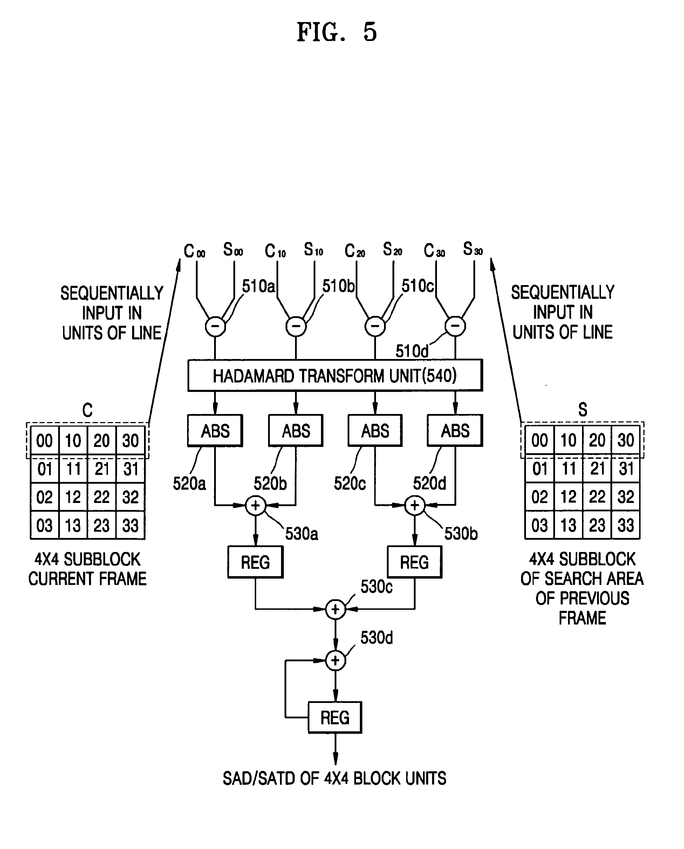

Figure 5 shows a detailed structure of each PE.

Each PE calculates an SAD or an SATD in 4x4 block units. Each PE includes four subtracting units 510a through 510d, four absolute value calculating units 520a through 520d, a plurality of adding units 530a through 530d, and a Hadamard transform unit 540. Each PE receives pixel values of a 4x4 block in units of a line. First, pixel values C₀₀, C₁₀, C₂₀, and C₃₀ of the first line of a current 4x4 block are subtracted from pixel values S₀₀, S₁₀, S₂₀, and S₃₀ of the first line of a 4x4 block of a search area. Results of the subtraction are processed by the Hadamard transform unit 540 and are transformed to a frequency domain. Next, absolute values of the frequency transformed subtraction are all added. During a next clock, pixel values C₀₁, C₁₁, C₂₁, and C₃₁ of a line following the first line of the current 4x4 block are subtracted from pixel values S₀₁, S₁₁, S₂₁, and S₃₁ of a line following the first line of the 4x4 block of the search area and results of the subtraction are processed by the Hadamard transform unit 540. Absolute values of the transformed subtraction are all added and a result of the addition is added to the result of the addition of SATDs for the previous line of the current 4x4 block. In this way, once pixel values of the next line are read and the above-described process is repeated, after four clocks, calculation of an SATD for the current 4x4 block is completed.

An SAD may be calculated instead of the SATD. In this case, the Hadamard transform unit 540 may not be included in the motion estimation unit.

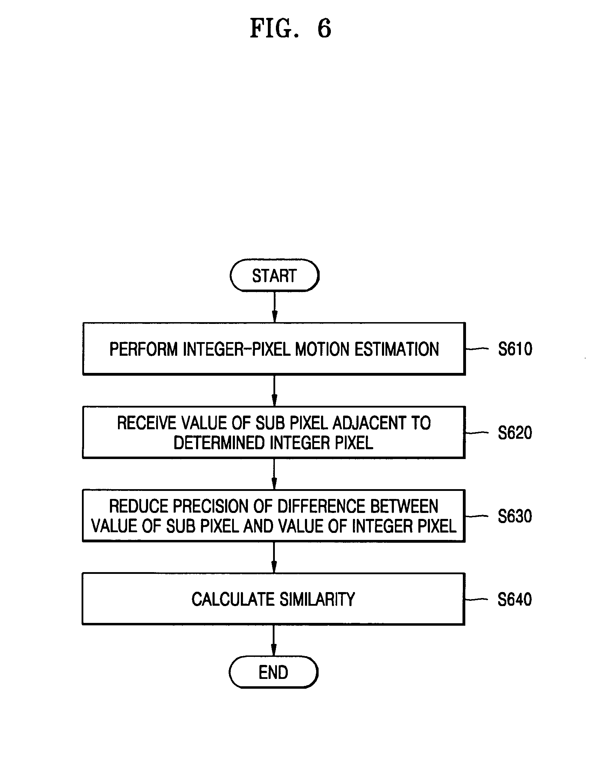

Figure 6 is a flowchart illustrating a method for sub-pixel motion estimation according to an exemplary embodiment of the present invention.

In the first operation S610, one integer pixel is determined by performing integer-pixel motion estimation. Integer-pixel motion estimation is already described with reference to Figure 1. In operation S620, a value of a sub-pixel that is adjacent to an integer pixel determined through integer-pixel motion estimation and a value of an integer pixel of a search block are received. The value of the sub-pixel and the value of the integer pixel each are 8 bits, and therefore, a difference therebetween is made up of nine bits at the minimum. Thus, to reduce the size of hardware, the difference is made to four bits or five bits in operation S630. In other words, since integer-pixel motion estimation is performed before sub-pixel motion estimation is performed, a difference between input pixel values for sub-pixel motion estimation is not large. Thus, even when the difference is made to four bits or five bits, the quality of encoded video is affected little. In this exemplary embodiment, the difference is expressed with four bits or five bits, but in some cases, it may be expressed with the smaller or larger bits. Then, in operation S640, the difference whose bit precision is reduced is used to calculate a similarity like an SAD or an SATD.

Here, a sub-pixel is a half pixel or quarter pixel. A half pixel is obtained by interpolating integer pixels that are adjacent to an integer pixel determined through integer-pixel motion estimation. A quarter pixel is obtained by interpolating half pixels that are adjacent to a half pixel determined through half-pixel motion estimation. The difference is made to four bits or five bits by removing several upper bits of the difference to reduce the number of bits of the difference.

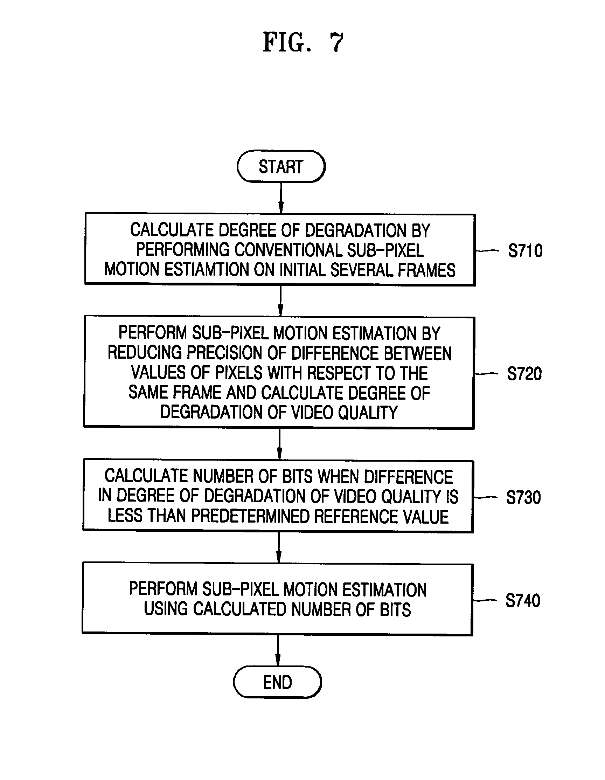

Figure 7 is a flowchart illustrating a method for sub-pixel motion estimation according to another exemplary embodiment of the present invention.

In the first operation S710, the degree of degradation of video quality is calculated by performing conventional sub-pixel motion estimation on several frames. The degree of degradation is, for example, obtained by calculating PSNR. Conventional sub-pixel motion estimation means using a difference between pixel values. In other words, a value of a sub-pixel that is adjacent to an integer pixel determined through integer-pixel motion estimation and a value of an integer pixel of a block to be searched are received and the PSNR, i.e., the degree of degradation, is calculated by performing sub-pixel motion estimation.

In operation S720, for the same frame, the precision of a difference between values of sub-pixels, i.e., the number of bits, is reduced and the degree of degradation of video quality is calculated by performing sub-pixel motion estimation. In operation S730, when a difference between the degrees of degradation calculated in operations 710 and 720 is less than a predetermined reference value, the number of bits of a difference between values of sub-pixels is checked. In operation S740, for frames following the current frame, the number of bits of a difference between values of sub-pixels is reduced to the checked number of bits and sub-pixel motion estimation is performed. For example, the reference value has a PSNR difference of 0.0A dB that is determined at a hundredth decimal place, and may preferably be 0.05 dB.

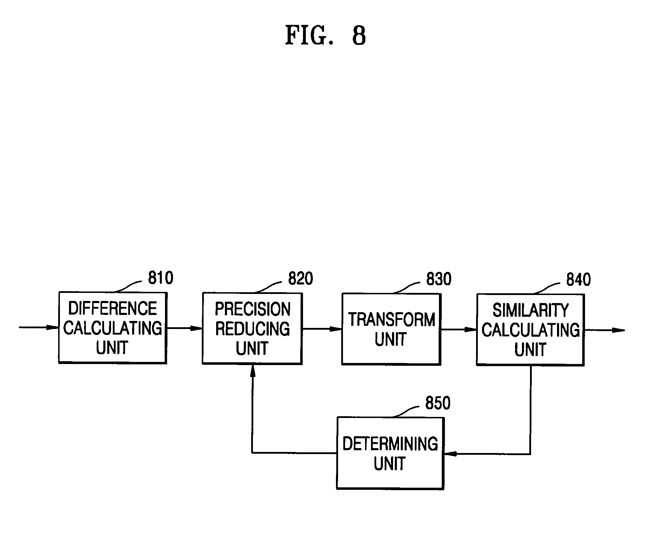

Figure 8 is a block diagram of an apparatus for sub-pixel motion estimation according to an exemplary embodiment of the present invention.

The apparatus for sub-pixel motion estimation includes a difference calculating unit 810, a precision reducing unit 820, a transform unit 830, and a similarity calculating unit 840.

The difference calculating unit 810 receives a value of a sub-pixel that is adjacent to one integer pixel that is determined through integer-pixel motion estimation and a value of an integer pixel of a block to be searched and calculates a difference therebetween. The precision reducing unit 820 reduces the number of bits of the calculated difference. For example, the number of bits can be reduced by discarding several upper bits to form four bits or five bits. The transform unit 830 transforms the difference whose number of bits is reduced into a frequency domain. For example, such transform can be made using Hadamard transform. At this time, when an SAD is calculated to calculate a similarity, it is not necessary to use the transform unit 830, but only when an SATD is calculated, the transform unit 830 is required. The similarity calculating unit 840 calculates a similarity using the difference whose number of bits is reduced.

As another example of the apparatus for sub-pixel motion estimation, the apparatus for sub-pixel motion estimation may further include a determining unit 850. The determining unit 850 receives a value of a sub-pixel that is adjacent to an integer pixel that is determined through integer-pixel motion estimation and a value of an integer pixel of a block to be searched only for one frame or several frames, checks the number of bits of a difference between values of sub-pixels when a difference between the degree of degradation of video quality after sub-pixel motion estimation and the degree of degradation of video quality after reduction of the number of bits of a difference between a value of a sub-pixel and a value of an integer pixel and then sub-pixel motion estimation is less than a predetermined reference value, controls the precision reducing unit 820 to reduce the number of bits of a difference between a value of a sub-pixel and a value of an integer pixel to the reduced number of bits, and then performs sub-pixel motion estimation.

The predetermined reference value may preferably be 0.0A dB that is determined at two decimal places.

As described above, according to the present invention, the size of hardware and the amount of time required for motion estimation of video can be largely reduced.

Meanwhile, the method for sub-pixel motion estimation can be embodied as a computer program. Codes and segments that construct the computer program can be easily construed by computer programmers skilled in the art. Also, the computer program is stored in computer readable media and is read and implemented by computers, thereby implementing the method for sub-pixel motion estimation. The computer readable recording media include magnetic recording media, optical data storage devices, and carrier waves.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for sub-pixel motion estimation in inter-prediction, the method comprising:
(a) determining an integer pixel corresponding to an estimated block by performing integer-pixel motion estimation;
(b) receiving a value of a sub-pixel that is adjacent to the determined integer pixel and a value of an integer pixel of a block to be searched;
(c) reducing a difference between the value of the sub-pixel and the value of the integer pixel and reducing a bit precision of the difference; and
(d) calculating a similarity using the difference whose bit precision is reduced.

2. The method of claim 1, wherein the sub-pixel is a half pixel or a quarter pixel, the half pixel is determined by interpolating integer pixels that are adjacent to the determined integer pixel, and the quarter pixel is determined by interpolating half pixels that are adjacent to the half pixel.

3. The method of claim 1 or 2, wherein in (c), when the difference between the value of the sub-pixel and the value of the integer pixel is calculated, the number of bits of the difference is reduced by discarding a predetermined number of upper bits of the difference to reduce the bit precision of the difference.

4. The method of claim 3, wherein in (c), a difference between values of the sub-pixels is made to four bits or five bits.

5. A method for sub-pixel motion estimation in inter-prediction, the method comprising:
(a) receiving a value of a sub-pixel that is adjacent to an integer pixel determined through integer-pixel motion estimation and a value of an integer pixel of a block to be searched;
(b) calculating a degree of degradation of video quality by performing sub-pixel motion estimation using the value of the sub-pixel and the value of the integer pixel;
(c) calculating a difference between the value of the sub-pixel and the value of the integer pixel to reduce a bit precision of the difference, performing sub-pixel motion estimation, and calculating the degree of degradation of video quality; and
(d) searching for a bit precision if a difference between the degree of degradation in (b) and the degree of degradation in (c) is less than a predetermined reference value, transforming the difference between the value of the sub-pixel and the value of the integer pixel according to the bit precision, and performing sub-pixel motion estimation on a following video.

6. The method of claim 5, wherein in (c) and (d), the degree of degradation of video quality is calculated using a peak signal-to-noise ratio (PSNR).

7. The method of claim 6, wherein the predetermined reference value in (d) is expressed by decibel units and is determined at a hundredth decimal place.

8. The method of claim 5, 6 or 7, wherein the sub-pixel is a half pixel or a quarter pixel, the half pixel is determined by interpolating integer pixels that are adjacent to the determined integer pixel, and the quarter pixel is determined by interpolating half pixels that are adjacent to the half pixel.

9. The method of any of claims 5 to 8, wherein in (c), when the difference between the value of the sub-pixel and the value of the integer pixel is calculated, a number of bits of the difference is reduced by discarding a predetermined number of upper bits of the difference to reduce the bit precision of the difference.

10. The method of claim 9, wherein in (c), a difference between values of the sub-pixels is made to four bits or five bits.

11. An apparatus for sub-pixel motion estimation in inter-prediction, the apparatus comprising:
a difference calculating unit (810) which receives a value of a sub-pixel that is adjacent to a determined integer pixel and a value of an integer pixel of a block to be searched and calculates a difference between the value of the sub-pixel and the value of the integer pixel;
a precision reducing unit (820) which reduces a bit precision of the calculated difference; and
a similarity calculating unit (840) which calculates a similarity between a search block and the block to be searched using the difference whose bit precision is reduced.

12. The apparatus of claim 11, further comprising a transform unit (830) which transforms the difference whose bit precision is reduced to a frequency domain.

13. The apparatus of claim 12, wherein the transform unit (830) performs Hadamard transform.

14. The apparatus of claim 12, wherein the similarity calculating unit (840) calculates a sum of absolute differences (SAD) with respect to the difference whose bit precision is reduced or a sum of absolute Hadamard transformed differences (SATD) with respect to a result of transform to the frequency domain.

15. The apparatus of any of claims 11 to 14, wherein the sub-pixel is a half pixel or a quarter pixel, the half pixel is determined by interpolating integer pixels that are adjacent to the determined integer pixel, and the quarter pixel is determined by interpolating half pixels that are adjacent to the half pixel.

16. The apparatus of any of claims 11 to 15, wherein the precision reducing unit (820) reduces the bit precision of the difference by discarding a predetermined number of upper bits of the difference when the difference between the value of the sub-pixel and the value of the integer pixel is calculated.

17. The apparatus of any of claims 11 to 16, further comprising a determining unit (850) which receives a value of a sub-pixel that is adjacent to an integer pixel determined through integer-pixel motion estimation and a value of an integer pixel of a search block for an initial frame, checks the number of bits of a difference between values of sub-pixels if a difference between the degree of degradation of video quality after sub-pixel motion estimation and the degree of degradation of video quality after reduction of the number of bits of the difference between the value of the sub-pixel and the value of the integer pixel and then sub-pixel motion estimation is less than the predetermined reference value, reduces the number of bits of the difference between the value of the sub-pixel and the value of the integer pixel to the reduced number of bits, and then performs sub-pixel motion estimation on a following video.

18. The apparatus of claim 17, wherein the degree of degradation of video quality is calculated using a peak signal-to-noise ratio (PSNR).

19. A computer readable recording medium having recorded thereon a program for implementing a method for sub-pixel motion estimation in inter-prediction, the method comprising:
(a) determining an integer pixel corresponding to an estimated block by performing integer-pixel motion estimation;
(b) receiving a value of a sub-pixel that is adjacent to the determined integer pixel and a value of an integer pixel of a block to be searched;
(c) reducing a difference between the value of the sub-pixel and the value of the integer pixel and reducing a bit precision of the difference; and
(d) calculating a similarity using the difference whose bit precision is reduced.
